# EUROPEAN PATENT APPLICATION

(11) **EP 3 550 546 A1**
(43) Date of publication of application: **09.10.2019**
(21) Application number: 17878614.1
(22) Date of filing: 05.10.2017
(51) Int. Cl.: G09F 21/04, G06Q 30/02, G09F 19/00

(54) **INFORMATION PROCESSING DEVICE AND INFORMATION PROCESSING SYSTEM**

(30) Priority: 05.12.2016 JP 2016235586
(71) Applicant: Sony Mobile Communications Inc., Shinagawa-ku Tokyo 140-0002 (JP); Sony Corporation, Tokyo 108-0075 (JP)
(72) Inventor: TAKANASHI, Shin, Tokyo 140-0002 (JP); ERIGUCHI, Masao, Tokyo 140-0002 (JP)
(74) Representative: Witte, Weller & Partner Patentanwälte mbB
(86) International application number: PCT/JP2017/036301
(87) International publication number: WO 2018/105217

(57) **Abstract**

Provided is an information processing apparatus including a processing unit configured to perform, on the basis of attribute information indicating an attribute of a provision target of an advertisement, and information regarding a vehicle that provides an advertisement, control regarding an advertisement to be provided by the vehicle.

## Description

### Technical Field

The present disclosure relates to an information processing apparatus and an information processing system.

### Background Art

A technology regarding the provision of an advertisement using a moving object has been developed. As a technology of enhancing an effect of an advertisement by controlling a movement of a moving object that provides information, such as an airplane and an automobile, for example, there is a technology described in Patent Literature 1 described below.

### Citation List

### Patent Literature

Patent Literature 1: JP 2015-184335A

### Disclosure of Invention

### Technical Problem

For example, in a case where a technology of controlling a movement of a moving object that provides an advertisement is used as in the technology described in Patent Literature 1, it is possible to increase the possibility that a person to be provided with the advertisement views the moving object.

Nevertheless, even if the possibility that a person to be provided with the advertisement views the moving object that provides the advertisement is simply increased, a provision effect of the advertisement is not always enhanced.

The present disclosure proposes an information processing apparatus and an information processing system that are novel and improved, and can enhance a provision effect of an advertisement.

### Solution to Problem

According to the present disclosure, there is provided an information processing apparatus including: a processing unit configured to perform, on the basis of attribute information indicating an attribute of a provision target of an advertisement, and information regarding a vehicle that provides an advertisement, control regarding an advertisement to be provided by the vehicle.

In addition, according to the present disclosure, there is provided an information processing system including: one or two or more vehicles; and an information processing apparatus configured to perform control regarding an advertisement to be provided by each of the vehicles. The information processing apparatus includes a processing unit configured to perform, on the basis of attribute information indicating an attribute of a provision target of an advertisement, and information regarding a vehicle that provides an advertisement, the control regarding the advertisement.

### Advantageous Effects of Invention

According to the present disclosure, a provision effect of an advertisement can be enhanced.

Note that the effects described above are not necessarily limitative. With or in the place of the above effects, there may be achieved any one of the effects described in this specification or other effects that may be grasped from this specification.

### Brief Description of Drawings

FIG. 1 is an explanatory diagram illustrating an example of a configuration of an information processing system according to the present embodiment.
FIG. 2 is a block diagram illustrating an example of a configuration of an information processing apparatus according to the present embodiment.
FIG. 3 is an explanatory diagram illustrating an example of a hardware configuration of the information processing apparatus according to the present embodiment.
FIG. 4A is an explanatory diagram illustrating an example of a vehicle according to the present embodiment.
FIG. 4B is an explanatory diagram illustrating an example of a vehicle according to the present embodiment.
FIG. 4C is an explanatory diagram illustrating an example of a vehicle according to the present embodiment.
FIG. 5 is a block diagram illustrating an example of a configuration of a vehicle according to the present embodiment.
FIG. 6 is an explanatory diagram illustrating an example of a hardware configuration of the vehicle according to the present embodiment.
FIG. 7 is a flowchart illustrating an example of processing related to a control method according to the present embodiment.
FIG. 8 is a flowchart illustrating another example of processing related to a control method according to the present embodiment.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

In addition, hereinafter, the description will be given in the following order.
1. Information processing system according to present embodiment
2. Control method according to present embodiment
3. Application example of each apparatus constituting information processing system according to present embodiment
4. Program according to present embodiment

### (Information processing system according to present embodiment)

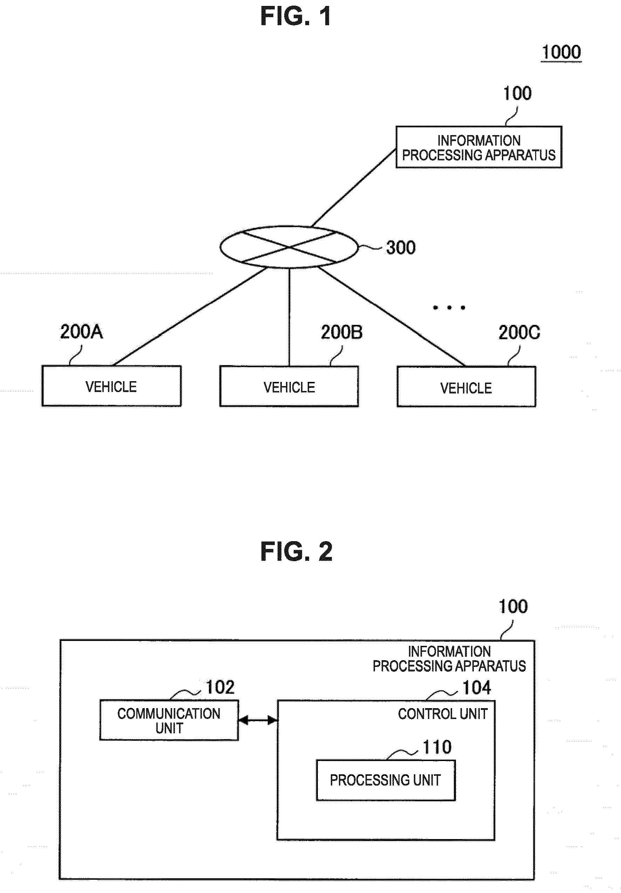

FIG. 1 is an explanatory diagram illustrating an example of a configuration of an information processing system 1000 according to the present embodiment. The information processing system 1000 includes an information processing apparatus 100, vehicles 200A, 200B, 200C, and so on, for example.

Note that the configuration of the information processing system according to the present embodiment is not limited to the example illustrated in FIG. 1. For example, FIG. 1 illustrates the example in which the information processing system according to the present embodiment includes a plurality of vehicles, but the information processing system according to the present embodiment may include one vehicle.

Hereinafter, a case where the information processing system according to the present embodiment includes a plurality of vehicles will be used as an example. In addition, hereinafter, the vehicles 200A, 200B, 200C, and so on that constitute the information processing system 1000 will be collectively referred to as "vehicles 200", or one vehicle among the vehicles 200A, 200B, 200C, and so on that constitute the information processing system 1000 will be referred to as a "vehicle 200".

The information processing apparatus 100 and the vehicle 200 are connected via a network 300, for example, in a wireless or wired manner. Examples of the network 300 include a wired network such as a local area network (LAN) or a wide area network (WAN), a wireless network such as a mobile communication network or a wireless local area network (WLAN), the internet that uses a communication protocol such as a Transmission Control Protocol/Internet Protocol (TCP/IP), or the like. Note that, in the information processing system according to the present embodiment, the information processing apparatus 100 and the vehicle 200 can directly perform communication not via the network 300.

### [1] Information processing apparatus 100

The information processing apparatus 100 performs control regarding an advertisement to be provided by a vehicle (the vehicle 200, or the information processing apparatus 100 and the vehicle 200) constituting the information processing system according to the present embodiment. Hereinafter, the control regarding an advertisement to be provided by a vehicle constituting the information processing system according to the present embodiment will be referred to as "control regarding an advertisement". An example of the control regarding an advertisement according to the present embodiment will be described in an example of processing related to a control method according to the present embodiment, which will be described later.

FIG. 2 is a block diagram illustrating an example of a configuration of the information processing apparatus 100 according to the present embodiment. The information processing apparatus 100 includes a communication unit 102 and a control unit 104, for example.

In addition, the information processing apparatus 100 may include a read only memory (ROM, not illustrated), a random access memory (RAM, not illustrated), a storage unit (not illustrated), and the like, for example. The information processing apparatus 100 connects between the above-described structural elements using a bus serving as a transmission path of data, for example.

The ROM (not illustrated) stores programs to be used by the control unit 104, and control data such as calculation parameters. The RAM (not illustrated) temporarily stores programs to be executed by the control unit 104, and the like.

The storage unit (not illustrated) is a storage means included in the information processing apparatus 100, and stores various types of data such as data related to control regarding an advertisement and various kinds of applications, for example. Here, examples of the storage unit (not illustrated) include a magnetic recording medium such as a hard disc, a nonvolatile memory such as a flash memory, and the like. In addition, the storage unit (not illustrated) may be detachable from the information processing apparatus 100.

### [Hardware configuration example of information processing apparatus 100]

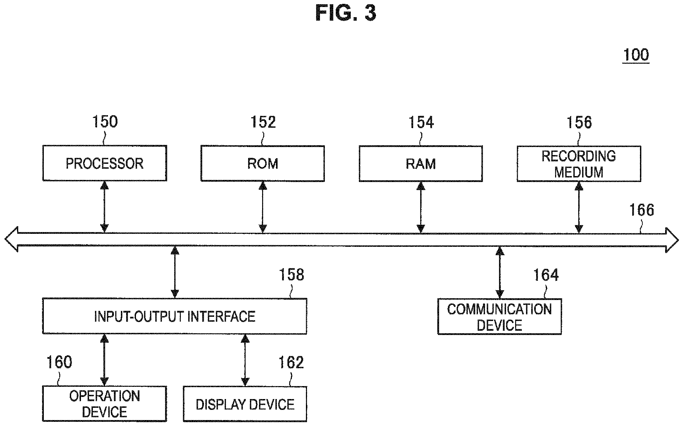

FIG. 3 is an explanatory diagram illustrating an example of a hardware configuration of the information processing apparatus 100 according to the present embodiment. The information processing apparatus 100 includes a processor 150, a ROM 152, a RAM 154, a recording medium 156, an input-output interface 158, an operation device 160, a display device 162, and a communication device 164, for example. In addition, the information processing apparatus 100 connects between the structural elements using a bus 166 serving as a transmission path of data, for example. In addition, the information processing apparatus 100 is driven by electric power to be supplied from an internal power source such as a battery included in the information processing apparatus 100, electric power to be supplied from a connected external power source, or the like, for example.

The processor 150 includes one or two or more processors each formed by an arithmetic circuit such as a micro processing unit (MPU), for example, various kinds of processing circuits, and the like, and functions as the control unit 104 that controls the entire information processing apparatus 100. In addition, in the information processing apparatus 100, the processor 150 serves as a processing unit 110 to be described later, for example. Note that the processing unit 110 may include a dedicated (or general-purpose) circuit (e.g. a processor separated from the processor 150, etc.) that can implement processing of each unit.

The ROM 152 stores programs to be used by the processor 150, and control data such as calculation parameters. The RAM 154 temporarily stores programs to be executed by the processor 150, for example, and the like.

The recording medium 156 functions as a storage unit (not illustrated), and stores various types of data such as data related to control regarding an advertisement, an image (still image or moving image) indicating an advertisement, and various kinds of applications, for example. Here, examples of the recording medium 156 include a magnetic recording medium such as a hard disc, and a nonvolatile memory such as a flash memory. In addition, the recording medium 156 may be detachable from the information processing apparatus 100.

The input-output interface 158 connects the operation device 160 and the display device 162, for example. Here, examples of the input-output interface 158 include a universal serial bus (USB) terminal, a digital visual interface (DVI) terminal, a High-Definition Multimedia Interface (HDMI) (registered trademark) terminal, various kinds of processing circuits, and the like.

In addition, the operation device 160 is provided on the information processing apparatus 100, for example, and is connected with the input-output interface 158 inside the information processing apparatus 100. Examples of the operation device 160 include a button, a cursor key, a rotary selector such as a jog dial, a combination of these, or the like.

In addition, the display device 162 is provided on the information processing apparatus 100, for example, and is connected with the input-output interface 158 inside the information processing apparatus 100. Examples of the display device 162 include a liquid crystal display, an organic EL display, and the like.

Note that, it should be appreciated that the input-output interface 158 can connect with an external device such as an external operation device (e.g. keyboard, mouse, etc.) and an external display device of the information processing apparatus 100. In addition, the display device 162 may be a device that can perform display and an operation, such as a touch panel, for example.

The communication device 164 is a communication means included in the information processing apparatus 100, and functions as the communication unit 102 for performing communication in a wireless or wired manner with an external apparatus such as the vehicle 200, for example, via the network 300 (or directly). Here, examples of the communication device 164 include a communication antenna and a radio frequency (RF) circuit (radio communication), an IEEE 802.15.1 port and a transmission/reception circuit (radio communication), an IEEE 802.11 port and a transmission/reception circuit (radio communication), a LAN terminal and a transmission/reception circuit (wired communication), or the like. In addition, the communication device 164 may have an arbitrary configuration supporting the network 300.

The information processing apparatus 100 performs control regarding an advertisement, using the configuration illustrated in FIG. 3, for example. Note that the hardware configuration of the information processing apparatus 100 according to the present embodiment is not limited to the configuration illustrated in FIG. 3.

For example, in the case of performing communication with an external apparatus or the like via a connected external communication device, the information processing apparatus 100 needs not include the communication device 164. In addition, the communication device 164 may have a configuration that can perform communication with one or two or more external apparatuses or the like using a plurality of communication methods.

In addition, the information processing apparatus 100 can employ a configuration not including one or two or more structural elements of the operation device 160, the display device 162, and the recording medium 156, for example.

In addition, the information processing apparatus 100 can employ a configuration corresponding to an application example of the information processing apparatus 100, which will be described later, for example.

In addition, for example, a part or all of the configuration illustrated in FIG. 3 (or a configuration according to a modified example) may be implemented by one or two or more integrated circuits (ICs).

An example of the configuration of the information processing apparatus 100 will be described with reference to FIG. 2 again. The communication unit 102 is a communication means included in the information processing apparatus 100, and performs communication in a wireless or wired manner with an external apparatus such as the vehicle 200 via the network 300 (or directly). In addition, the communication of the communication unit 102 is controlled by the control unit 104, for example.

Here, examples of the communication unit 102 include a communication antenna and an RF circuit, a LAN terminal and a transmission/reception circuit, and the like, but the configuration of the communication unit 102 is not limited to the above-described configuration. For example, the communication unit 102 can employ a configuration supporting an arbitrary standard that can perform communication of a USB terminal, a transmission/reception circuit, or the like, or an arbitrary configuration that can communicate with an external apparatus via the network 300. In addition, the communication unit 102 may have a configuration that can perform communication with one or two or more external apparatuses using a plurality of communication methods.

The control unit 104 includes one or two or more processors and the like, for example, and takes a role of controlling the entire information processing apparatus 100. In addition, the control unit 104 includes the processing unit 110, for example. The processing unit 110 takes the initiative in performing control regarding an advertisement, which will be described later.

The information processing apparatus 100 has a configuration illustrated in FIG. 2, for example.

Note that the configuration of the information processing apparatus 100 according to the present embodiment is not limited to the configuration illustrated in FIG. 2.

For example, the information processing apparatus 100 can include (e.g. implement by a different processing circuit) the processing unit 110 illustrated in FIG. 2, separately from the control unit 104.

In addition, for example, in the case of performing communication with an external apparatus via an external communication device having a function and a configuration that are similar to those of the communication unit 102, the information processing apparatus 100 needs not include the communication unit 102.

### [2] Vehicle 200

The vehicle 200 is a mobile object that can be operated by a driver, can be remotely operated by an external driver, or can be automatically operated without a driver. In a case where a remote operation is performed by an external driver or an automatic operation is performed, a person may ride in the vehicle 200, or no person may ride therein. Examples of an automatic operation in the vehicle 200 according to the present embodiment include an automatic operation corresponding to a level 3 or level 4 defined by the National Highway Traffic Safety Administration (NHTSA). Note that, in a case where an operation is performed by a driver or a remote operation is performed by an external driver, in the vehicle 200, an automatic operation corresponding to a level 1 or level 2 defined by the NHTSA may be applied.

Examples of the vehicle 200 include an electrical automobile moved by a motor, such as a power-operated vehicle. Note that the vehicle 200 according to the present embodiment is not limited to the electrical automobile. Another application example of the vehicle 200 according to the present embodiment will be described later.

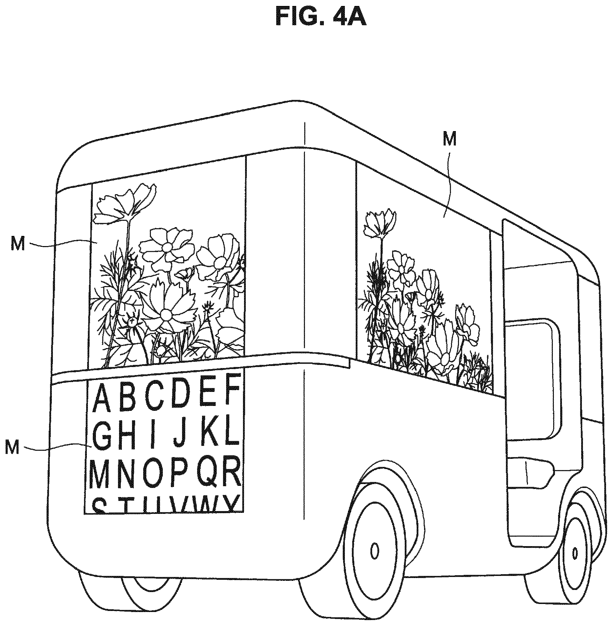

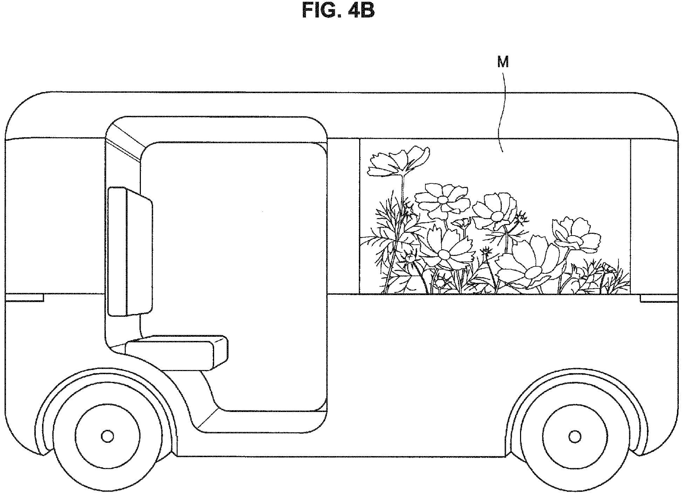

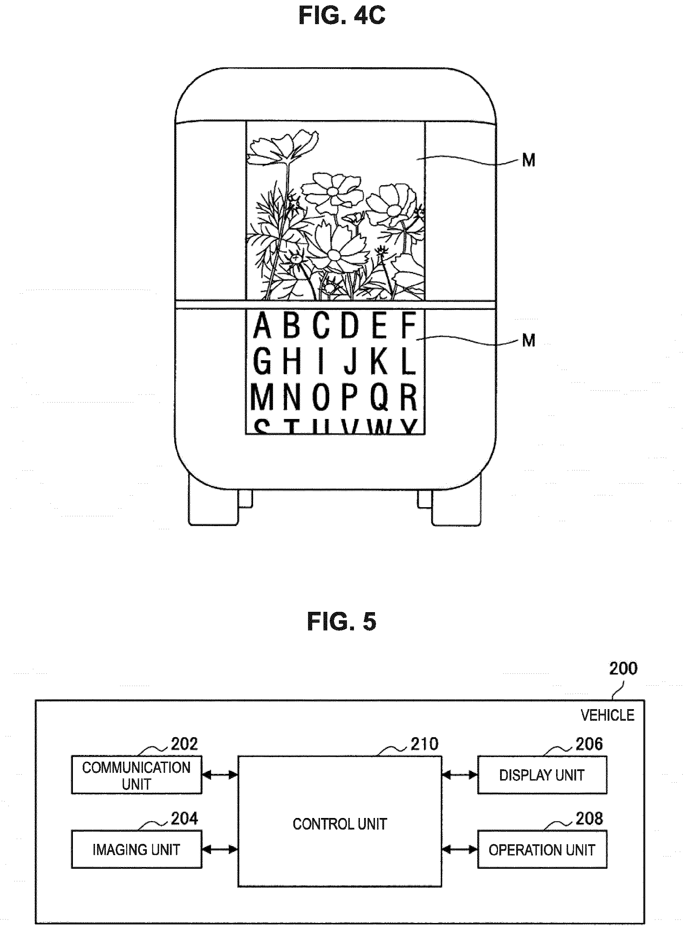

FIGS. 4A, 4B, and 4C are explanatory diagrams illustrating an example of the vehicle 200 according to the present embodiment. When a forward movement direction of the vehicle 200 is used as a reference, FIGS. 4A, 4B, and 4C illustrate examples of external appearances obtainable in a case where the vehicle 200 are respectively viewed from the following directions. Hereinafter, the forward movement direction of the vehicle 200 is represented as "front" and a backward movement direction is represented as "rear".
- FIG. 4A: an example of an external appearance obtainable in a case where the vehicle 200 is viewed from the diagonally forward left
- FIG. 4B: an example of an external appearance obtainable in a case where the vehicle 200 is viewed from the right
- FIG. 4C: an example of an external appearance obtainable in a case where the vehicle 200 is viewed from the rear

The vehicle 200 includes various types of sensors such as an imaging device (image sensor), or a position sensor such as a Global Navigation Satellite System (GNSS) device, for example. The vehicle 200 includes one or two or more imaging devices that can capture images of the surrounding of the vehicle 200, such as a foreside, a lateral side, and a back side of the vehicle 200, for example. In addition, an imaging device included in the vehicle 200 may be a stereo camera. In addition, a position sensor included in the vehicle 200 may be a sensor of an arbitrary method that can estimate a position, such as a sensor that estimates a position using radio communication with a base station, and a sensor that estimates a position using a Simultaneous Localization And Mapping (SLAM) technology, for example.

In addition, for example, as illustrated in FIGS. 4A, 4B, and 4C, a display screen M that can display various types of characters and images is provided on each of the foreside, the lateral side, and the back side of the vehicle 200.

Here, examples of images to be displayed on the display screen M include an image (still image or moving image) indicating an advertisement. The vehicle 200 can provide an advertisement by causing an image indicating the advertisement to be displayed on the display screen M, for example. In other words, each display device that displays an image on the display screen M corresponds to an example of a provision device that provides an advertisement.

Note that an image to be displayed on the display screen M is not limited to an image indicating an advertisement. For example, an arbitrary image may be displayed on the display screen M in accordance with an operation performed by a driver of the vehicle 200, an owner of the vehicle 200, or the like.

The display control of an image on each of the display screens M is performed by a control unit 210 included in the vehicle 200, which will be described later, for example.

Note that the external appearance or the like of the vehicle 200 according to the present embodiment is not limited to the examples illustrated in FIGS. 4A, 4B, and 4C. For example, FIGS. 4A, 4B, and 4C illustrate an example in which the display screens M are respectively provided on the foreside, the lateral side, and the back side of the vehicle 200, but the display screen M needs not be provided on a part of the foreside, the lateral side, and the back side of the vehicle 200. Hereinafter, an example in which the vehicle 200 according to the present embodiment is a vehicle illustrated in FIGS. 4A, 4B, and 4C will be described.

FIG. 5 is a block diagram illustrating an example of a configuration of the vehicle 200 according to the present embodiment. The vehicle 200 includes a communication unit 202, an imaging unit 204, a display unit 206, an operation unit 208, and the control unit 210, for example.

In addition, the vehicle 200 includes a drive unit (not illustrated) for moving the vehicle. Examples of the drive unit (not illustrated) include a drive device to be described later.

In addition, the vehicle 200 may include a ROM (not illustrated), a RAM (not illustrated), a storage unit (not illustrated), and the like, for example. The vehicle 200 connects between the above-described structural elements using a bus serving as a transmission path of data, for example.

The ROM (not illustrated) stores programs to be used by the control unit 210, and control data such as calculation parameters. The RAM (not illustrated) temporarily stores programs to be executed by the control unit 210, and the like.

The storage unit (not illustrated) is a storage means included in the vehicle 200, and stores various types of data such as an image (still image or moving image) indicating an advertisement and various kinds of applications, for example. Here, examples of the storage unit (not illustrated) include a magnetic recording medium such as a hard disc, a nonvolatile memory such as a flash memory, and the like. In addition, the storage unit (not illustrated) may be detachable from the vehicle 200.

### [Hardware configuration example of vehicle 200]

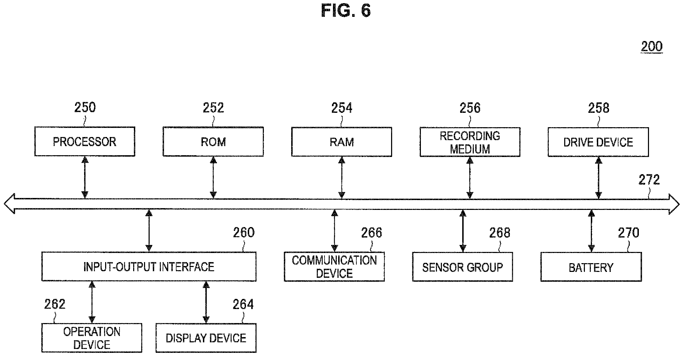

FIG. 6 is an explanatory diagram illustrating an example of a hardware configuration of the vehicle 200 according to the present embodiment. The vehicle 200 includes a processor 250, a ROM 252, a RAM 254, a recording medium 256, a drive device 258, an input-output interface 260, an operation device 262, a display device 264, a communication device 266, a sensor group 268, and a battery 270, for example. In addition, the vehicle 200 connects between the structural elements using a bus 172 serving as a transmission path of data or the like, for example. The vehicle 200 is driven by electric power to be supplied from an internal power source such as the battery 270, electric power to be supplied from a connected external power source, or the like, for example.

The processor 250 includes one or two or more processors each formed by an arithmetic circuit such as a MPU, for example, various kinds of processing circuits, and the like, and controls the entire vehicle 200. In addition, the processor 250 functions as the control unit 210 to be described later.

The ROM 252 stores programs to be used by the processor 250, and control data such as calculation parameters. The RAM 254 temporarily stores programs to be executed by the processor 250, for example, and the like.

The recording medium 256 functions as a storage unit (not illustrated), and stores various types of data such as various kinds of applications, for example. Here, examples of the recording medium 256 include a magnetic recording medium such as a hard disc, and a nonvolatile memory such as a flash memory. In addition, the recording medium 256 may be detachable from the vehicle 200.

As the drive device 258, for example, various types of devices (or mechanisms) related movements of the vehicle 200, such as a driving power source such as a motor, wheels, a transmission device for transmitting driving power generated by the driving power source, to the wheels, and a brake mechanism, are included. Note that the drive device 258 can employ various types of configurations corresponding to application examples of the vehicle 200, which will be described later.

The input-output interface 260 connects the operation device 262 and the display device 264, for example. The operation device 262 functions as the operation unit 208, and in addition, the display device 264 functions as the display unit 206. Here, examples of the input-output interface 260 include a USB terminal, a DVI terminal, an HDMI (registered trademark) terminal, various kinds of processing circuits, and the like.

The operation device 262 is connected with the input-output interface 260 in a wired manner, for example. Note that the operation device 262 may be connected with the input-output interface 260 by radio communication of an arbitrary communication method. In a case where the operation device 262 is connected with the input-output interface 260 by radio communication, the operation device 262 can also be regarded as an external operation device of the vehicle 200.

Examples of the operation device 262 include a "game controller including a cursor key, a button, a stick device, and the like", a "controller including a steering wheel, a shift lever, an accelerator pedal, and a brake pedal", and the like. Note that, it should be appreciated that examples of the operation device for performing a driving operation of the vehicle 200 are not limited to the above-described examples.

The display device 264 is provided on the vehicle 200, for example, and is connected with the input-output interface 260 inside the vehicle 200. Examples of the display device 264 include a liquid crystal display, an organic EL display, and the like. Note that FIG. 6 illustrates one display device 264, but the vehicle 200 can include a plurality of display devices 264 as illustrated in FIGS. 4A, 4B, and 4C, for example.

Examples of positions at which the display devices 264 are provided include "positions on the foreside, the lateral side, and the back side of the vehicle 200 that can be viewed from the outside of the vehicle 200" as illustrated in FIGS. 4A, 4B, and 4C. Note that, as described above, it should be appreciated that positions at which the display devices 264 are provided are not limited to the examples illustrated in FIGS. 4A, 4B, and 4C.

Note that, it should be appreciated that the input-output interface 260 can connect with an external device such as an external operation device (e.g. keyboard, mouse, etc.) and an external display device of the vehicle 200. In addition, the display device 264 may be a device that can perform display and an operation, such as a touch panel, for example.

The communication device 266 is a communication means included in the vehicle 200, and functions as the communication unit 202 for performing communication in a wireless or wired manner with an external apparatus such as the information processing apparatus 100, for example, via the network 300 (or directly).

Here, examples of the communication device 266 include a communication antenna and an RF circuit (radio communication), an IEEE 802.15.1 port and a transmission/reception circuit (radio communication), an IEEE 802.11 port and a transmission/reception circuit (radio communication), a LAN terminal and a transmission/reception circuit (wired communication), or the like. In addition, the communication device 266 may have an arbitrary configuration supporting to the network 300.

The sensor group 268 includes one or two or more imaging devices (image sensors), for example. The imaging device includes a lens/image pickup element and a signal processing circuit, for example. The lens/image pickup element includes an optical lens and an image sensor including a plurality of image pickup elements, for example. Examples of the image pickup element (not illustrated) include a complementary metal oxide semiconductor (CMOS), a charge coupled device (CCD), and a stack-type image pickup element in which another structural element such as a CCD is stacked on a CMOS. The signal processing circuit includes an automatic gain control (AGC) circuit and an analog to digital converter (ADC), for example, and converts an analog signal generated by the image pickup element into a digital signal (image data).

In addition, the sensor group 268 may further include one or two or more sensors such as a position sensor such as a GNSS device, and a motion sensor such as an acceleration sensor and an angular velocity sensor.

The battery 270 is an internal power source included in the vehicle 200. Each device in the vehicle 200 that is to be driven by electric power is driven by electric power to be supplied from the battery 270, for example. Note that, as described above, the vehicle 200 can also be driven by electric power to be supplied from a connected external power source.

The vehicle 200 has the configuration illustrated in FIG. 6, for example. Note that the hardware configuration of the vehicle 200 according to the present embodiment is not limited to the configuration illustrated in FIG. 6.

For example, the vehicle 200 may further include a voice output device (not illustrated) such as a speaker. The vehicle 200 includes one or two or more nondirectional voice output devices (not illustrated) or directional voice output devices (not illustrated), for example.

Examples of voices (including music) to be output from the voice output device (not illustrated) include a voice indicating the content of an advertisement, such as a voice indicating the content of a product, and a voice indicating the content of an event. In other words, the voice output device (not illustrated) corresponds to another example of a provision device that provides an advertisement.

In addition, for example, in the case of performing communication with an external apparatus or the like via a connected external communication device, the vehicle 200 needs not include the communication device 266. In addition, the communication device 266 may have a configuration that can perform communication with one or two or more external apparatuses or the like using a plurality of communication methods.

In addition, for example, in a case where a driving operation is performed by a connected external operation device, or in a case where an automatic operation is performed, the vehicle 200 needs not include the operation device 262.

In addition, for example, in a case where an image is displayed on a display screen of a connected external display device, the vehicle 200 needs not include the display device 264.

In addition, for example, in a case where one or two or more external sensors are connected, the vehicle 200 needs not include a part or all of the sensors constituting the sensor group 268.

In addition, for example, in the case of being driven by electric power to be supplied from a connected external battery, the vehicle 200 needs not include the battery 270.

In addition, the vehicle 200 can employ a configuration not including the recording medium 256.

In addition, the vehicle 200 can employ a configuration corresponding to an application example of the vehicle 200, which will be described later, for example.

In addition, for example, a part or all of the configurations illustrated in FIG. 6 (or configurations according to a modified example) may be implemented by one or two or more ICs.

An example of the configuration of the vehicle 200 will be described with reference to FIG. 5 again. The communication unit 202 is a communication means included in the vehicle 200, and performs communication in a wireless or wired manner with an external apparatus such as the information processing apparatus 100 via the network 300 (or directly). In addition, the communication of the communication unit 202 is controlled by the control unit 210, for example.

Here, examples of the communication unit 202 include a communication antenna and an RF circuit, a LAN terminal and a transmission/reception circuit, and the like, but the configuration of the communication unit 202 is not limited to the above-described configuration. For example, the communication unit 202 can employ a configuration supporting an arbitrary standard that can perform communication of a USB terminal, a transmission/reception circuit, or the like, or an arbitrary configuration that can communicate with an external apparatus via the network 300. In addition, the communication unit 202 may have a configuration that can perform communication with one or two or more external apparatuses using a plurality of communication methods.

The imaging unit 204 is an imaging means included in the vehicle 200, and serves as an image sensor that captures images of the surrounding of the vehicle 200 such as the foreside, the lateral side, and the back side of the vehicle 200. Examples of the imaging unit 204 include one or two or more imaging devices constituting the sensor group 268.

The display unit 206 is a display means included in the vehicle 200, and causes various types of images such as an image indicating an advertisement, and the like to be displayed on a display screen. Examples of the display unit 206 include the display device 264.

The operation unit 208 is an operation means included in the vehicle 200. Examples of the operation unit 208 include the operation device 262.

The control unit 210 includes one or two or more processors, and the like, for example, and takes a role of controlling the entire vehicle 200.

Examples of control in the control unit 210 include display control of an image onto the display screen M (control of the display device 264), output control of a voice from the voice output device (not illustrated), control of communication performed by the communication unit 202, control of the drive device 258, and the like, for example.

On the basis of control information (to be described later) transmitted from the information processing apparatus 100, for example, the control unit 210 performs processing related to control related to the provision of an advertisement, such as the above-described display control and the above-described output control of a voice.

In addition, in a case where the display screen M is provided on the back side as in the vehicle 200 illustrated in FIG. 4C, the control unit 210 may cause a captured image obtained by capturing an image of the foreside (i.e. travelling direction side) of the vehicle 200, and an image indicating an advertisement, to be displayed on the display screen M on the back side in a switched manner.

By displaying, on the display screen M on the back side, a captured image obtained by capturing an image of the foreside of the vehicle 200, and an image indicating an advertisement as described above, for example, it is possible to provide an advertisement to a driver of a vehicle existing behind the vehicle 200, and cause the driver to recognize a situation of the front of the vehicle 200. In addition, by causing the driver to recognize a situation of the front of the vehicle 200 together with the provision of an advertisement, for example, an "effect of reducing a discomfort feeling that can possibly be felt by the driver of the vehicle existing behind the vehicle 200, toward the provided advertisement" is expected.

Note that the processing in the control unit 210 is not limited to the above-described processing related to various kinds of control. For example, the control unit 210 may further perform processing of generating attribute information, which will be described later. In addition, in the vehicle 200, the processing of generating attribute information that is to be described later may be performed by a dedicated (or general-purpose) circuit (e.g. a processor separated from the control unit 210, etc.) that can implement the processing of generating attribute information.

The vehicle 200 has the configuration illustrated in FIG. 5, for example.

Note that the configuration of the vehicle 200 according to the present embodiment is not limited to the configuration illustrated in FIG. 5.

For example, in the case of performing communication with an external apparatus via an external communication device having a function and a configuration that are similar to those of the communication unit 202, the vehicle 200 needs not include the communication unit 202.

In addition, for example, in a case where an external imaging device having a function and a configuration that are similar to those of the imaging unit 204 is connected, the vehicle 200 needs not include the imaging unit 204.

In addition, for example, in a case where an external display device having a function and a configuration that are similar to those of the display unit 206 is connected, the vehicle 200 needs not include the display unit 206.

In addition, for example, in a case where an external operation device having a function and a configuration that are similar to those of the operation unit 208 is connected, the vehicle 200 needs not include the operation unit 208.

The information processing system 1000 according to the present embodiment has the configuration illustrated in FIG. 1, for example. In the information processing system 1000 having the configuration illustrated in FIG. 1, as described later, the provision of an advertisement in each of the vehicles 200 is controlled by the information processing apparatus 100. Accordingly, in the information processing system 1000, a provision effect of an advertisement is enhanced.

Note that the configuration of the information processing system according to the present embodiment is not limited to the example illustrated in FIG. 1.

For example, the information processing system according to the present embodiment may include a plurality of information processing apparatuses that can perform control regarding an advertisement of the vehicles constituting the information processing system according to the present embodiment. Each of the information processing apparatuses constituting the information processing system according to the present embodiment includes a function and a configuration that are similar to those of the information processing apparatus 100 illustrated in FIG. 6, for example.

In addition, the information processing system according to the present embodiment may further include an imaging apparatus provided at a location (e.g. store, etc.) corresponding to advertisement content. In the information processing system including the above-described imaging apparatus, the information processing apparatus 100 performs processing regarding the evaluation of an advertisement (to be described later), on the basis of a captured image captured by the imaging apparatus.

### (Control method according to present embodiment)

### [I] Overview of processing related to control method according to present embodiment

Next, processing related to a control method according to the present embodiment in the information processing apparatus 100 that can enhance a provision effect of an advertisement will be described mainly using the above-described information processing system 1000 as an example.

The information processing apparatus 100 performs control regarding an advertisement, on the basis of attribute information and information regarding a vehicle.

The information processing apparatus 100 specifies an area to be provided with an advertisement, for example, and performs control regarding an advertisement, on the basis of attribute information of a provision target included in the specified area, and information regarding a vehicle included in the specified area. The information processing apparatus 100 specifies an area to be provided with an advertisement, on the basis of an operation of a user of the information processing apparatus 100 (e.g. an operator operating the information processing apparatus 100, etc.), for example.

As described above, by the information processing apparatus 100 performing control regarding an advertisement, on the basis of attribute information and information regarding a vehicle that correspond to an area to be provided with an advertisement, an information processing system that can provide an advertisement more suitable for the area is implemented. Note that, it should be appreciated that the information processing apparatus 100 can perform control regarding an advertisement, without specifying an area to be provided with an advertisement.

Examples of the control regarding an advertisement according to the present embodiment include control of content of an advertisement to be provided, and control of the provision of an advertisement. An example of the control of content of an advertisement to be provided according to the present embodiment, and an example of the control of the provision of an advertisement according to the present embodiment will be described later.

The information processing apparatus 100 performs the control regarding an advertisement, by causing the communication unit 102 (or external communication device) to transmit control information to the vehicle 200 to be controlled. The processing related to the control regarding an advertisement is performed by the processor 150, for example, as described above.

Examples of the control information according to the present embodiment include "data indicating an advertisement to be provided, and data including a processing command regarding an advertisement, such as a display command". In addition, the control information may include data indicating a method of providing an advertisement. Examples of the data indicating a method of providing an advertisement include data indicating a display device on which display is to be performed, among a plurality of display devices included in the vehicle 200, data indicating a voice output device to be caused to perform an output, among a plurality of voice output devices included in the vehicle 200, and the like. In addition, the data indicating a method of providing an advertisement may include a command for outputting a sound that attracts attention of surrounding people at the provision start of an advertisement.

An example of the control regarding an advertisement according to the present embodiment which will be described later.

The attribute information according to the present embodiment is data indicating an attribute of a provision target of an advertisement.

Examples of the provision target of an advertisement according to the present embodiment include a person existing around the vehicle 200. Examples of the provision target of an advertisement include a person that can possibly view the display screen M of the vehicle 200, or a person that can possibly hear a voice output by the vehicle 200.

As described later, the attribute information is generated on the basis of a captured image captured by the imaging unit 204 included in the vehicle 200, for example. In other words, examples of the provision target of an advertisement include a person existing in an imaging range of the imaging unit 204 included in the vehicle 200, that is to say, a person that can be included in a captured image.

Examples of the attribute information according to the present embodiment include data regarding an individual serving as a provision target of an advertisement that indicates gender, age (or age group. The same applies to the following.), clothes, hairstyle, and the like of a provision target of an advertisement. In addition, the attribute information according to the present embodiment may be data regarding a group of people serving as a provision target of an advertisement that indicates the number of people serving as a provision target of an advertisement, a percentage of gender, a percentage of age, a percentage of clothes, a percentage of hairstyle, and the like.

The attribute information is generated by detecting a person by performing face detection processing on a captured image captured by the imaging unit 204 included in the vehicle 200, and performing arbitrary image processing of analyzing gender, age, and the like on the detected face, for example.

Here, the processing of generating attribute information may be performed by the information processing apparatus 100, or may be performed by an external apparatus of the information processing apparatus 100 such as the vehicle 200. In a case where the processing of generating attribute information is performed by the information processing apparatus 100, the information processing apparatus 100 acquires attribute information by generating attribute information by processing a captured image to be acquired from the vehicle 200. In addition, in a case where the processing of generating attribute information is performed by an external apparatus, the information processing apparatus 100 acquires attribute information from the external apparatus, for example.

In addition, information regarding a vehicle according to the present embodiment is data regarding the vehicle 200 that provides an advertisement.

Examples of the information regarding a vehicle include one or two or more pieces of information of information indicating a position of the vehicle 200, information indicating a movement of the vehicle 200, information indicating a surrounding environment of the vehicle 200, and information indicating a type of the vehicle 200.

Examples of the information indicating a position of the vehicle 200 include data indicating a coordinate position at which the vehicle 200 exists (e.g. data indicating latitude and longitude), and data indicating a place where the vehicle 200 exists (e.g. data indicating a name of a road on which the vehicle 200 exists, or the like). The information indicating a position of the vehicle 200 is obtained on the basis of a detection result of the position sensor constituting the sensor group 268 included in the vehicle 200, for example. The information processing apparatus 100 acquires the information indicating a position of the vehicle 200, by performing communication with the vehicle 200.

In addition, examples of the information indicating a movement of the vehicle 200 include one or two or more pieces of information that can represent a movement of the vehicle 200, such as information indicating a movement speed of the vehicle 200, and information indicating acceleration of the vehicle 200. The information indicating a movement of the vehicle 200 is obtained on the basis of a detection result of the motion sensor constituting the sensor group 268 included in the vehicle 200, for example. The information processing apparatus 100 acquires the information indicating a movement of the vehicle 200, by performing communication with the vehicle 200.

In addition, examples of the information indicating a surrounding environment of the vehicle 200 include information indicating an event being held within a predetermined range from a position at which the vehicle 200 exists, information indicating a congestion situation (traffic jam situation) of a road, and the like. The information indicating a surrounding environment of the vehicle 200 is acquired by the information processing apparatus 100 performing communication with an external apparatus such as a server that manages various kinds of information, for example. In addition, the information processing apparatus 100 may acquire the information indicating a surrounding environment of the vehicle 200, from the vehicle 200 that has performed communication with the above-described server or the like that manages various kinds of information.

In addition, examples of the information indicating a type of the vehicle 200 include arbitrary information that can identify the vehicle 200, such as information indicating a vehicle type, and information indicating a vehicle identification number. The information indicating a type of the vehicle 200 is acquired by the information processing apparatus 100 performing communication with the vehicle 200 or an external apparatus such as a server that manages the vehicle 200, for example.

Note that the information regarding a vehicle according to the present embodiment is not limited to the above-described example.

For example, the information regarding a vehicle may include display restriction information indicating restriction on display on one or two or more display devices 264 included in the vehicle 200.

Examples of the restriction on display according to the present embodiment include either one or both of restriction as to whether or not to perform display of an advertisement, and restriction regarding content of an advertisement to be displayed. For example, in a case where an imposed restriction indicates that display of an advertisement is not to be performed on a certain display device of the display devices 264 included in the vehicle 200, display of an advertisement is not performed on the restricted certain display device in the vehicle 200. In addition, for example, in a case where display of an advertisement of a certain product is restricted on a certain display device of the display devices 264 included in the vehicle 200, display of an advertisement of the restricted certain product is not performed in the vehicle 200.

Examples of restriction content indicated by the display restriction information according to the present embodiment include first restriction content to third restriction content listed below.
- First restriction content: display of an image indicating an advertisement and advertisement content are not restricted on all the display devices 264 included in the vehicle 200
- Second restriction content: display of an image indicating an advertisement and advertisement content are restricted on all the display devices 264 included in the vehicle 200
- Third restriction content: "display of an image indicating an advertisement is restricted on a part of the display devices 264 included in the vehicle 200", and/or "advertisement content is restricted on all the display devices 264 included in the vehicle 200 or a part of the display devices 264"

Restriction content indicated by display restriction information is set on the basis of money paid to the vehicle 200, for example. For example, in a case where money is not paid for a price set to the vehicle 200, the above-described first restriction content is set. In addition, for example, in a case where full amount of money is paid for the price set to the vehicle 200, the above-described second restriction content is set. In addition, for example, in a case where a part of money is paid for the price set to the vehicle 200, the above-described third restriction content is set. The restriction in the above-described third restriction content can vary depending on the paid money in the following manner. For example, "as an amount of paid money is larger, the number of display devices on which the display of an image indicating an advertisement is restricted increases".

The restriction content indicated by display restriction information is set by a server or the like that is managed by a service operator or the like that provides a service of selling the vehicle 200, for example. The above-described server or the like that is managed by the service operator or the like may change restriction regarding the content of an advertisement to be displayed, on the basis of an operation of a predetermined user such as an owner of the vehicle 200, for example. Note that restriction content indicated by display restriction information may be set by the information processing apparatus 100.

The information processing apparatus 100 acquires display restriction information by performing communication with the above-described server or the like that is managed by the service operator or the like. Then, the information processing apparatus 100 restricts a display device on which an advertisement is to be displayed in the vehicle 200, on the basis of the display restriction information.

By control regarding an advertisement that is based on display restriction information being performed as described above, for example, the following business models that are based on money paid to the vehicle 200 are implemented.
- Business model of earning revenue from an advertisement rate while promoting the spread of the vehicle 200, by providing the vehicle 200 for free, and displaying an advertisement on the vehicle 200 provided for free (an example of a business model obtainable in a case where the first restriction content is set)
- Business model of earning revenue by selling the vehicle 200 (an example of a business model obtainable in a case where the second restriction content is set)
- Business model of earning revenue from an advertisement rate while promoting the spread of the vehicle 200, by providing the vehicle 200 by discount sale, and displaying an advertisement on the vehicle 200 provided at a discount (an example of a business model obtainable in a case where the third restriction content is set)

Hereinafter, the processing related to a control method according to the present embodiment will be described more specifically.

As processing related to a control method, for example, the information processing apparatus 100 performs "(1) processing related to control regarding an advertisement described below", or "(1) processing related to control regarding an advertisement described below and (2) processing regarding evaluation of an advertisement described below".

### (1) Processing related to control regarding advertisement

The information processing apparatus 100 performs control regarding an advertisement, on the basis of attribute information and information regarding a vehicle.

As described above, as control regarding an advertisement, the information processing apparatus 100 performs control of content of an advertisement to be provided, and control of the provision of an advertisement. More specifically, the information processing apparatus 100 decides an advertisement (control of content of an advertisement) on the basis of attribute information and information regarding a vehicle, for example, and causes the vehicle 200 to provide the decided advertisement (control of the provision of an advertisement).

### (1-1) Example of control of content of advertisement

The information processing apparatus 100 decides an advertisement on the basis of attribute information and information regarding a vehicle, for example.

The information processing apparatus 100 decides one type of an advertisement, for example.

In addition, the information processing apparatus 100 may decide a plurality of types of advertisements, for example. In a case where a plurality of types of advertisements is decided, in the vehicle 200, the decided plurality of advertisements may be simultaneously provided by a plurality of provision devices, or the decided plurality of advertisements may be provided by one or two or more provision devices in a switched manner.

Furthermore, in the case of deciding a plurality of types of advertisements, the information processing apparatus 100 may decide a plurality of types of advertisements while placing priorities thereon.

The information processing apparatus 100 decides an advertisement by referring to a table (or database. Hereinafter, will be sometimes referred to as an "advertisement decision table".) in which "data corresponding to attribute information, data corresponding to information regarding a vehicle, and data indicating one or two or more pieces of advertisement content are associated", for example, and specifying advertisement content corresponding to attribute information and information regarding a vehicle.

The advertisement decision table is stored into a storage unit (not illustrated) or a recording medium such as an external recording medium, for example.

In addition, the advertisement decision table can be appropriately updated. Processing of updating the advertisement decision table may be performed by the information processing apparatus 100, or may be performed by an external apparatus of the information processing apparatus 100. By performing the processing of updating the advertisement decision table, more effective provision of an advertisement, such as provision of an advertisement for each time slot, provision of an advertisement for each area in which the vehicle 200 exists, and an advertisement corresponding to a provision target existing in the area, for example, can be implemented.

In addition, in a case where data indicating a plurality of pieces of advertisement content are associated in the advertisement decision table, a priority may be preset to data indicating each piece of advertisement content. By referring to the table in which priorities are set, the information processing apparatus 100 can decide a plurality of types of advertisements while placing priorities thereon.

Note that a priority of each advertisement may be set on the basis of either one or both of attribute information and information regarding a vehicle. As an example, in a case where a percentage of female is recognized to be larger than a percentage of male on the basis of attribute information, for example, a higher priority is set to an advertisement aimed at female. In addition, as another example, as a distance between a position of the vehicle 200 that is indicated by information regarding a vehicle, and a position of a store corresponding to an advertisement becomes closer, for example, a higher priority is set to an advertisement corresponding to the store. In addition, a priority can also be set by combining the above-described examples. Here, processing related to the setting of a priority may be performed by the information processing apparatus 100, or may be performed by an external apparatus of the information processing apparatus 100.

Examples of the advertisement decision table include a "table in which a position of a vehicle, gender and age of a provision target, and data indicating one or two or more pieces of advertisement content are associated". For example, the information processing apparatus 100 specifies a position of a vehicle on the basis of information regarding a vehicle, and specifies a provision target on the basis of attribute information. Then, the information processing apparatus 100 specifies data indicating advertisement content corresponding to the attribute information and the information regarding a vehicle, by referring to the above-described "table in which a position of a vehicle, gender and age of a provision target, and advertisement content are associated".

For example, by referring to the "table in which a position of a vehicle, gender and age of a provision target, and data indicating one or two or more pieces of advertisement content are associated" as described above, the information processing apparatus 100 decides, as an advertisement to be provided by the vehicle 200, an advertisement corresponding to the position of the vehicle that is specified on the basis of the information regarding the vehicle, and the provision target specified on the basis of the attribute information. In addition, in a case where priorities are set in the "table in which a position of a vehicle, gender and age of a provision target, and data indicating one or two or more pieces of advertisement content are associated", it is possible to decide advertisements corresponding to the position of the vehicle that is specified on the basis of the information regarding the vehicle, and the provision target specified on the basis of the attribute information, while placing priorities thereon.

Note that the advertisement decision table according to the present embodiment is not limited to the above-described example.

For example, the advertisement decision table may further include information indicating a target of each advertisement. The target of an advertisement according to the present embodiment refers to a target person desired to be provided with an advertisement that is assumed by a provision source of the advertisement, for example. Examples of a target indicated by the information indicating a target of an advertisement include a passerby, a driver of a vehicle existing behind the vehicle 200, and the like.

In addition, the advertisement decision table may further include either one or both of information indicating a provision period of an advertisement (e.g. data indicating a provision period such as one month from a certain date, and three weeks from when the provision is started), and information indicating a provision time slot of an advertisement (e.g. data indicating a time slot such as morning: 6 to 10, afternoon: 11 to 15, evening: 18 to 22), for example. When the information indicating a provision period of an advertisement is included in the advertisement decision table, an advertisement that satisfies the provision period (an advertisement to be provided at a time point that falls within the provision period) is provided. In addition, when the information indicating a provision time slot of an advertisement is included in the advertisement decision table, an advertisement that satisfies the provision time slot (an advertisement to be provided at a time point that falls within the provision time slot) is provided.

### (1-2) Control of provision of advertisement

For example, when an advertisement is decided by the control regarding an advertisement that has been described above in (1-1), the information processing apparatus 100 causes the vehicle 200 to provide the decided advertisement.

The information processing apparatus 100 causes the vehicle 200 to provide the decided advertisement, by transmitting, to the vehicle 200 to be controlled, control information including data indicating the decided advertisement (data indicating an advertisement to be provided) and a processing command regarding an advertisement, for example.

For example, in a case where the advertisement decision table includes information indicating a target of an advertisement, a processing command regarding an advertisement includes a command corresponding to the target indicated by the information indicating a target of an advertisement. For example, in a case where the information indicating a target of an advertisement indicates a driver of a vehicle existing behind the vehicle 200, the information processing apparatus 100 generates a processing command regarding an advertisement that includes a command for causing an advertisement to be displayed on the display screen M provided on the back side of the vehicle 200 as illustrated in FIG. 4C.

Here, examples of the above-described vehicle 200 to be controlled include the vehicle 200 corresponding to information regarding a vehicle.

Note that the above-described vehicle 200 to be controlled is not limited to the above-described example.

For example, by transmitting, on the basis of a distance between the vehicle 200 corresponding to information regarding a vehicle, and another vehicle 200, control information to the other vehicle 200, the information processing apparatus 100 can also cause the other vehicle 200 to provide the decided advertisement.

As an example, the information processing apparatus 100 calculates a linear distance between the vehicle 200 corresponding to information regarding a vehicle, and another vehicle 200, on the basis of positions indicated by pieces of information regarding a vehicle that correspond to the respective vehicles 200, for example. Then, in a case where the calculated linear distance is smaller than a set threshold value (or in a case where the linear distance is equal to or smaller than the threshold value), the information processing apparatus 100 causes the other the vehicle 200 to provide the decided advertisement.

For example, as described above, by the information processing apparatus 100 causing the decided advertisement to be provided on the basis of a distance between the vehicle 200 corresponding to information regarding a vehicle, and another vehicle 200, it is implemented that "the same advertisement is provided to a plurality of vehicles 200 existing in a range set when a position of the vehicle 200 corresponding to information regarding a vehicle is used as a reference".

Note that an example of control of the provision of an advertisement is not limited to the above-described example.

For example, as processing related to control of the provision of an advertisement, the information processing apparatus 100 can further perform one or two or more types of processing of processing to be described below in (1-2-1), processing to be described below in (1-2-2), processing to be described below in (1-2-3), and processing to be described below in (1-2-4).

### (1-2-1) Processing related to control of method of providing advertisement

The information processing apparatus 100 controls a method of providing a decided advertisement, on the basis of information regarding a vehicle. Examples of controlling a method of providing a decided advertisement include examples (A) to (D) to be described below, for example. Note that, it should be appreciated that the examples of controlling a method of providing a decided advertisement are not limited to the examples (A) to (D) to be described below.

### (A) Restriction on provision of decided advertisement

The information processing apparatus 100 restricts provision of a decided advertisement in the vehicle 200, on the basis of information regarding a vehicle, for example. More specifically, the information processing apparatus 100 restricts provision of an advertisement in the vehicle 200 in accordance with restriction content indicated by display restriction information (an example of information regarding a vehicle), for example.

For example, in a case where the display restriction information indicates the above-described first restriction content, the information processing apparatus 100 does not cause the vehicle 200 to provide the decided advertisement.

In addition, for example, in a case where the display restriction information indicates the above-described second restriction content, the information processing apparatus 100 causes the vehicle 200 to provide the decided advertisement without imposing restrictions.

In addition, for example, in a case where the display restriction information indicates the above-described third restriction content, the information processing apparatus 100 partially restricts provision of the decided advertisement in the vehicle 200.

For example, in a case where the vehicle 200 includes a plurality of provision devices, the information processing apparatus 100 restricts provision of the advertisement that uses a part of the plurality of provision devices. For example, as illustrated in FIGS. 4A to 4C, in a case where the vehicle 200 includes a plurality of display devices (an example of provision device), the information processing apparatus 100 does not cause a part of the display devices to display the decided advertisement.

Here, a provision device for which the information processing apparatus 100 restricts provision of the advertisement may be a preset provision device, or may be dynamically set on the basis of information regarding a vehicle. Examples in which a provision device to be restricted is dynamically set include an example in which "a provision device to be restricted is set in such a manner that a provision device to be restricted in display varies depending on a speed of the vehicle 200 that is indicated by the information indicating a movement of the vehicle 200 (an example of information regarding a vehicle)", and the like, for example. The information processing apparatus 100 specifies a provision device corresponding to the speed indicated by the information indicating a movement of the vehicle 200, by referring to a table (or database) in which a speed and a provision device to be restricted are associated, for example.

Note that the vehicle 200 may vary an advertisement to be provided, depending on a speed of the vehicle 200. As an example, the vehicle 200 varies an advertisement to be provided, between a time when a speed of the vehicle 200 is fast (e.g. when a speed of the vehicle 200 is 50[km/h] or more), a time when a speed of the vehicle 200 is slow (e.g. when a speed of the vehicle 200 is less than 50[km/h]), and a time when the vehicle 200 is stopped.

Examples in which an advertisement varies by speed include "varying to an advertisement of another product or an advertisement of another service", "varying to alternative version of an advertisement of the same product, or alternative version of an advertisement of the same service", and the like, for example. Examples of the above-described alternative version of an advertisement include an advertisement movie of 15[seconds], an advertisement movie of 30[seconds], and an advertisement movie of 60[seconds], for example.

For example, when a speed of the vehicle 200 is fast, there is a possibility that, by the vehicle 200 running away while a person serving as a provision target of an advertisement is viewing an advertisement movie, the vehicle 200 goes out of a field of view of the person. Thus, the vehicle 200 repeatedly replays a short advertisement movie such as an advertisement movie of 15[seconds]. In addition, for example, when a speed of the vehicle 200 is slow, the vehicle 200 repeatedly replays an advertisement movie of 30[seconds] longer than that replayed when a speed of the vehicle 200 is fast, and when the vehicle 200 is stopped, the vehicle 200 repeatedly replays an advertisement movie of 60[seconds] longer than that replayed when a speed of the vehicle 200 is slow.

### (B) Cooperation by plurality of vehicles

The information processing apparatus 100 causes a plurality of vehicles 200 to provide a decided advertisement in cooperation on the basis of information regarding a vehicle corresponding to each of the plurality of vehicles 200.

The information processing apparatus 100 calculates a linear distance between the vehicle 200 corresponding to information regarding a vehicle, and another vehicle 200, on the basis of positions indicated by pieces of information regarding a vehicle that correspond to the respective vehicles 200, for example. Then, in a case where the calculated linear distance is smaller than a set threshold value (or in a case where the linear distance is equal to or smaller than the threshold value), the information processing apparatus 100 causes the decided advertisement to be provided in cooperation.

Examples of causing a plurality of vehicles 200 to provide an advertisement in cooperation include examples to be described below, for example. Note that, it should be appreciated that examples of causing a plurality of vehicles 200 to provide an advertisement in cooperation are not limited to the examples to be described below.
- Cause a plurality of vehicles 200 to provide the same advertisement at the same timing.
- Cause a plurality of vehicles 200 to provide the same advertisement at different timings corresponding to a distance between the vehicles 200.
- Cause a plurality of vehicles 200 to provide different advertisements corresponding to the same product or service (e.g. an advertisement aimed at male, an advertisement aimed at female, etc.).

As a specific example, an example in which a plurality of vehicles 200 replays an advertisement movie of 60 [seconds] for pedestrians will be described. In a case where a first vehicle 200 stops at a certain position, starts to replay the advertisement movie, and then, runs away from the certain position around 20[seconds] of the advertisement movie, a second vehicle 200 that comes to the certain position after the first vehicle 200 replays the advertisement movie from around 20[seconds], which continues from the advertisement movie replayed by the first vehicle 200, without replaying the advertisement movie from the beginning at the certain position, for example. The above-described specific example of cooperation can be implemented by a plurality of vehicles 200 sharing information regarding replay of advertisement content at a certain position (e.g. in a case where advertisement content is a movie, data indicating for how many[seconds] the movie has been replayed, etc.), for example. Examples of sharing of information regarding replay of advertisement content between a plurality of vehicles 200 include sharing caused by direct communication being performed between the vehicles 200, sharing caused via the information processing apparatus 100, and the like.

Note that the above-described specific example of cooperation is an example of provision of an advertisement that is performed by a plurality of vehicles 200 in cooperation on the basis of a specific position, but the example of cooperation according to the present embodiment is not limited to the above-described example. As another example of cooperation according to the present embodiment, there is provision of an advertisement that is performed by a plurality of vehicles 200 in cooperation on the basis of an image of a specific person recognized by an imaging device included in the vehicle 200. As a specific example that is based on an image of a specific person, there is an example in which "a first vehicle 200 recognizes a specific person and starts replay of an advertisement movie, and information regarding replay of advertisement content corresponding to the advertisement movie is shared by a following second vehicle 200 at a timing at which the first vehicle 200 runs away from the person", for example. By the above-described specific example that is based on an image of a specific person, for example, it is implemented that "also in a situation in which the vehicle 200 successively overtakes pedestrians walking on the side of a road, an advertisement movie is effectively presented without presenting redundant scenes of the advertisement movie to pedestrians".

### (C) Restriction on provision time of advertisement

The information processing apparatus 100 restricts a provision time of a decided advertisement in the vehicle 200 on the basis of attribute information, for example.

The information processing apparatus 100 restricts a provision time for each advertisement by deciding a provision time of an advertisement on the basis of a percentage indicated by attribute information (e.g. percentage of gender, percentage of age, etc.), for example. The information processing apparatus 100 restricts a provision time for each advertisement by deciding a provision time for each decided advertisement by referring to a "table (or database) in which a percentage corresponding to attribute information, data indicating advertisement content, and a provision time are associated", for example.

By a provision time being restricted for each advertisement, for example, time allocation of an advertisement to be provided in a certain period can be changed on the basis of attribute information. As an example, in a case where a percentage indicated by the attribute information indicates that the number of females is larger than the number of males, in a set period, a time for which advertisement content aimed at female is to be replayed in the vehicle 200 becomes longer than a time for which advertisement content aimed at male is to be replayed in the vehicle 200. By a provision time being restricted for each advertisement as described above, for example, a person having a high possibility of viewing an advertisement can be provided with an advertisement more suitable for the person (advertisement aimed at the person).

### (D)

The information processing apparatus 100 can also combine two or more examples of the example described above in (A) to the example to be described below in (C).

### (1-2-2) Processing related to control that is based on priority

For example, in a case where a plurality of types of advertisements is decided while placing priorities thereon, by the control regarding an advertisement that has been described above in (1-1), the information processing apparatus 100 causes the vehicle 200 to be controlled, to provide the plurality of types of decided advertisements by a provision method that is based on a priority.

Here, examples of the provision method that is based on a priority according to the present embodiment include examples to be described below. Note that, it should be appreciated that examples of the provision method that is based on a priority are not limited to the examples to be described below.
- Cause each advertisement to be displayed in such a manner that a time for which a corresponding advertisement is to be displayed on a display screen becomes longer as a priority becomes higher (example in which allocation of a time for which an advertisement is to be provided is controlled on the basis of a priority)
- Cause each advertisement to be displayed in such a manner that a region to be displayed on a display screen becomes larger as a priority becomes higher (example in which allocation of a screen region in which an advertisement is to be provided is controlled on the basis of a priority)
- A combination of the two examples described above

### (1-2-3) Processing related to control corresponding to evaluation result obtained by processing regarding evaluation of advertisement

The information processing apparatus 100 causes the vehicle 200 to provide an advertisement corresponding to a result of processing regarding the evaluation of an advertisement, which will be described later. A provision example of an advertisement corresponding to an evaluation result obtained by the processing regarding the evaluation of an advertisement will be described later.

### (1-2-4) Processing related to movement control of vehicle 200

The information processing apparatus 100 performs processing related to movement control of the vehicle 200, on the basis of information regarding a vehicle.

The information processing apparatus 100 specifies a location to which a target of a decided advertisement assembles, on the basis of information indicating a surrounding environment of the vehicle 200, for example (an example of information regarding a vehicle). In addition, the information processing apparatus 100 decides a route for moving the vehicle 200 to the specified location, on the basis of information indicating a position of the vehicle 200 (another example of information regarding a vehicle), and the specified location, for example. Then, the information processing apparatus 100 moves the vehicle 200 to the specified location by transmitting control information including the route for moving the vehicle 200 to the specified location.

Note that, it should be appreciated that an example of processing related to movement control of the vehicle 200 is not limited to the above-described example.

The information processing apparatus 100 causes the vehicle 200 to provide an advertisement by performing the above-described processing related to control regarding an advertisement, as processing related to a control method according to the present embodiment. Here, because the information processing apparatus 100 causes the vehicle 200 to provide an advertisement decided on the basis of attribute information and information regarding a vehicle, there is a high possibility that the advertisement is provided to a target set for the advertisement.

Accordingly, the information processing apparatus 100 can enhance a provision effect of an advertisement by performing the above-described processing related to control regarding an advertisement.

### (2) Processing regarding evaluation of advertisement

The information processing apparatus 100 may further perform processing regarding the evaluation of an advertisement provided by the vehicle 200.

The information processing apparatus 100 evaluates an advertisement provided by the vehicle 200, by analyzing a captured image acquired from an imaging apparatus provided at a location corresponding to advertisement content, such as a store, for example.

As an example, the information processing apparatus 100 detects a person by performing face detection processing on a captured image acquired from the above-described imaging apparatus, for example, and generates attribute information of a person that has come to a location corresponding to advertisement content, by performing arbitrary image processing of analyzing gender, age, and the like on the detected face. Then, the information processing apparatus 100 evaluates a provision effect of an advertisement on the basis of a target set for the advertisement provided by the vehicle 200, and an analysis result to be obtained from the generated attribute information (e.g. percentage of gender, percentage of age, etc.).

As another example, as described above, the information processing apparatus 100 performs face detection processing on a captured image acquired from the vehicle 200, and detects a face of a person who exists around the vehicle 200 and serves as a provision target of an advertisement. In addition, the information processing apparatus 100 performs face detection processing on a captured image acquired from the above-described imaging apparatus, for example, and detects a face of a person who has come to a location corresponding to advertisement content. Then, the information processing apparatus 100 evaluates a provision effect of an advertisement by comparing a feature amount of the face detected from the captured image acquired from the vehicle 200, and a feature amount of the face detected from the captured image acquired from the above-described imaging apparatus, and determining whether or not the person serving as a provision target of the advertisement has come to the location corresponding to the advertisement content.

Here, in a case where it is determined that the person serving as a provision target of the advertisement has come to the location corresponding to the advertisement content, incentive such as discount or point grant may be given to the person determined to have come to the location corresponding to the advertisement content. The above-described processing of giving incentive may be performed by the information processing apparatus 100, or may be performed by an external apparatus of the information processing apparatus 100, such as a server.

Note that an example of the processing regarding the evaluation of an advertisement provided by the vehicle 200 is not limited to the above-described example, and the information processing apparatus 100 can perform arbitrary processing that can evaluate an advertisement provided by the vehicle 200.

For example, by the above-described processing regarding the evaluation of an advertisement being performed, in the information processing system 1000, a provision effect of an advertisement is evaluated. Thus, in the information processing system 1000, for example, by processing related to control corresponding to an evaluation result being performed by the information processing apparatus 100, it becomes possible to implement the following provision of an advertisement corresponding to an evaluation result. Note that, it should be appreciated that an example of the processing regarding the evaluation of an advertisement and a provision example of an advertisement corresponding to an evaluation result in the information processing apparatus 100 are not limited to the examples to be described below.
- The information processing apparatus 100 recognizes a customer segment of which the number of customers is smaller than usual, by analyzing customer segments at a certain time point in a store corresponding to advertisement content. Then, the information processing apparatus 100 causes the vehicle 200 to provide an advertisement aimed at the recognized customer segment. In addition, the information processing apparatus 100 may specify an area to which customers of the recognized customer segment assemble, on the basis of attribute information to be acquired from the vehicle 200, and cause the vehicle 200 existing in the specified area, to provide the advertisement aimed at the recognized customer segment.

### [II] Specific example of processing related to control method according to present embodiment

Next, a specific example of the above-described processing related to a control method according to the present embodiment will be described. Hereinafter, as an example of the processing related to a control method according to the present embodiment, "an example of processing to be performed in a case where the information processing apparatus 100 is an apparatus separated from a vehicle constituting the information processing system 1000", and "an example of processing to be performed in a case where the information processing apparatus 100 is a vehicle constituting the information processing system 1000" will be described.

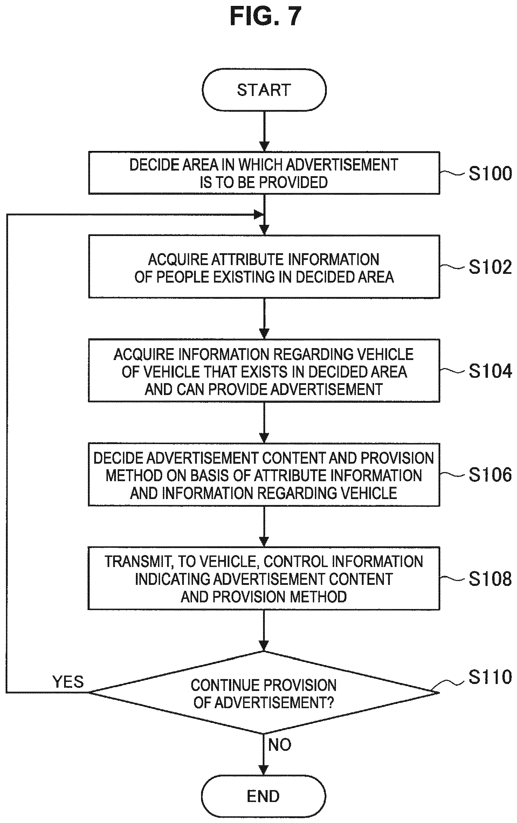

FIG. 7 is a flowchart illustrating an example of processing related to a control method according to the present embodiment. FIG. 7 illustrates an example of processing related to a control method that is to be performed in a case where the information processing apparatus 100 is an apparatus separated from a vehicle constituting the information processing system 1000, such as a case where the information processing apparatus 100 is a server.

The information processing apparatus 100 decides an area in which an advertisement is to be provided (S100). The information processing apparatus 100 specifies an area in which an advertisement is to be provided, on the basis of an operation of a user of the information processing apparatus 100, for example.

The information processing apparatus 100 acquires attribute information of people existing in the decided area (S102). The information processing apparatus 100 acquires attribute information by processing a captured image acquired from the vehicle 200 existing in the decided area, or acquiring attribute information from the vehicle 200, for example.

The information processing apparatus 100 acquires information regarding a vehicle of the vehicle 200 existing in the decided area (SI04). The information processing apparatus 100 acquires the information regarding a vehicle by performing communication with the vehicle 200 or an external apparatus such as a server that manages various kinds of information, for example.

The information processing apparatus 100 decides advertisement content and a provision method on the basis of the attribute information and the information regarding a vehicle (SI06). The information processing apparatus 100 decides the advertisement content and the provision method by performing the processing related to control regarding an advertisement that has been described above in (1-1), for example.

The information processing apparatus 100 transmits control information to the vehicle 200 (S108).

The information processing apparatus 100 determines whether or not to cause the vehicle 200 to continue the provision of the advertisement (S110). The information processing apparatus 100 does not determine to cause the vehicle 200 to continue the provision of the advertisement, in cases such as a case where it is determined that a provision period set for the advertisement has elapsed, or a case where an operation of stopping the provision of the advertisement is detected, for example.

In a case where it is determined in step S110 that the vehicle 200 is to be caused to continue the provision of the advertisement, the information processing apparatus 100 repeats the processing from step S102. In addition, in a case where it is not determined in step S110 that the vehicle 200 is to be caused to continue the provision of the advertisement, the information processing apparatus 100 ends the processing illustrated in FIG. 7. Note that the vehicle 200 provides the advertisement on the basis of the received control information, and as for advertisement content to be provided, for example, a plurality of types of images (still images or moving images) indicating advertisements are prestored in a storage unit (not illustrated), an advertisement is selected from the storage unit (not illustrated) on the basis of the control information, and the selected advertisement is provided. As another example of advertisement content to be provided, after receiving control information from the information processing apparatus 100, the vehicle 200 acquires an image indicating a specific advertisement, from the information processing apparatus 100 on the basis of the control information, and provides the acquired image indicating the advertisement, for example.

In a case where the information processing apparatus 100 is an apparatus separated from a vehicle constituting the information processing system 1000, by performing the processing illustrated in FIG. 7, for example, the information processing apparatus 100 causes the vehicle 200 to provide an advertisement decided on the basis of attribute information and information regarding a vehicle. Thus, by the processing illustrated in FIG. 7 being performed, for example, a provision effect of an advertisement can be enhanced. Note that, it should be appreciated that an example of the processing related to a control method that is to be performed in a case where the information processing apparatus 100 is an apparatus separated from a vehicle constituting the information processing system 1000 is not limited to the example illustrated in FIG. 7.

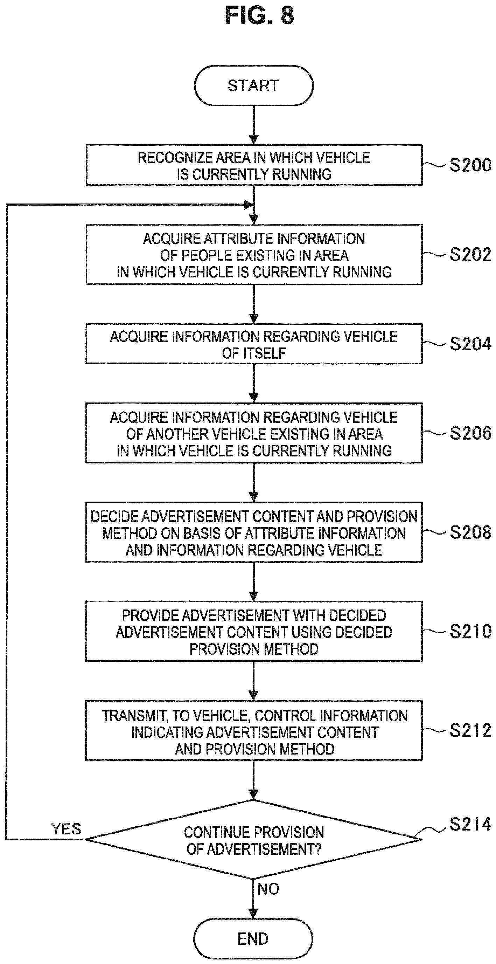

FIG. 8 is a flowchart illustrating another example of processing related to a control method according to the present embodiment. FIG. 8 illustrates an example of processing related to a control method that is to be performed in a case where the information processing apparatus 100 is a vehicle constituting the information processing system 1000 (i.e. in a case where at least one of the vehicles 200 constituting the information processing system 1000 functions as the information processing apparatus 100).

The information processing apparatus 100 recognizes an area in which the vehicle is currently running (S200). The information processing apparatus 100 recognizes an area in which the vehicle is currently running, on the basis of a detection result of a position sensor such as a GNSS device, and the like, for example.

The information processing apparatus 100 acquires attribute information of people existing in the area recognized in step S200 (S202). The information processing apparatus 100 acquires attribute information by processing a captured image captured by an imaging device included in the information processing apparatus 100, processing a captured image acquired from the vehicle 200 (another vehicle) existing in the recognized area, or acquiring attribute information from the vehicle 200, for example.

The information processing apparatus 100 acquires information regarding a vehicle of itself (the information processing apparatus 100) (S204). The information processing apparatus 100 acquires information regarding a vehicle that corresponds to the information processing apparatus 100, by performing communication with various kinds of sensors included in the information processing apparatus 100, or an external apparatus such as a server that manages various kinds of information.

The information processing apparatus 100 acquires information regarding a vehicle of the vehicle 200 (another vehicle) existing in the area recognized in step S200 (S206). Similarly to step S104 in FIG. 7, for example, the information processing apparatus 100 acquires information regarding a vehicle by performing communication with the vehicle 200 or an external apparatus such as a server that manages various kinds of information.

Similarly to step S106 in FIG. 7, the information processing apparatus 100 decides advertisement content and a provision method on the basis of attribute information and information regarding a vehicle (S208).

The information processing apparatus 100 provides an advertisement with the advertisement content decided in step S208, using the provision method decided in step S208 (S210).

Similarly to step S108 in FIG. 7, the information processing apparatus 100 transmits control information to the vehicle 200 (another vehicle) (S212).

Similarly to step S110 in FIG. 7, the information processing apparatus 100 determines whether or not to cause the information processing apparatus 100 and the vehicle 200 (another vehicle) to continue the provision of the advertisement (S214).

In a case where it is determined in step S214 that the vehicle 200 is to be caused to continue the provision of the advertisement, the information processing apparatus 100 repeats the processing from step S202. In addition, in a case where it is not determined in step S214 that the vehicle 200 is to be caused to continue the provision of the advertisement, the information processing apparatus 100 ends the processing illustrated in FIG. 8.

In a case where the information processing apparatus 100 is a vehicle constituting the information processing system 1000, by performing the processing illustrated in FIG. 8, for example, the information processing apparatus 100 causes the information processing apparatus 100 and the vehicle 200 (another vehicle) to provide an advertisement decided on the basis of attribute information and information regarding a vehicle. Thus, by the processing illustrated in FIG. 8 being performed, for example, a provision effect of an advertisement can be enhanced. Note that, it should be appreciated that an example of the processing related to a control method that is to be performed in a case where the information processing apparatus 100 is a vehicle constituting the information processing system 1000 is not limited to the example illustrated in FIG. 8.

### (Application example of each apparatus constituting information processing system according to present embodiment)

Hereinbefore, as a structural element of the information processing system according to the present embodiment, an information processing apparatus has been described as an example, but the present embodiment is not limited to this configuration. The present embodiment can be applied to various types of devices that can function as the information processing apparatus according to the present embodiment, such as "a computer such as a personal computer (PC) or a server", "a communication apparatus such as a smartphone", "an arbitrary wearable device such as an eyewear device, a wristwatch-type device, and a bracelet-type device that is to be used with being attached to the body of a user", "a tablet device", and "a game machine", for example. In addition, as described above, the information processing apparatus according to the present embodiment may be the vehicle according to the present embodiment. In addition, the present embodiment can also be applied to a processing IC that can be incorporated into the above-described device, for example.

In addition, as a structural element of the information processing system according to the present embodiment, a vehicle has been described as an example, but the present embodiment is not limited to this configuration. The present embodiment can be applied to an arbitrary mobile object that can be operated by a driver, such as "an electrical automobile moved by a motor, such as a power-operated vehicle", "an electric wheelchair moved by a motor", "an automobile moved by an internal-combustion engine that obtains driving power by combusting gasoline, light oil, or the like", and "a mobile object that can move without using wheels, such as a hovercraft and a biped walking robot", for example.

### (Program according to present embodiment)

A provision effect of an advertisement can be enhanced by a program for causing a computer to function as an information processing apparatus according to the present embodiment (e.g. a program functioning as the processing unit 110), being executed by a processor in the computer.

In addition, by a program for causing a computer to function as an information processing apparatus according to the present embodiment, being executed by a processor in the computer, an effect to be caused by the above-described processing related to a control method according to the present embodiment can be caused.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the above description, it has been described that a program (computer program) for causing a computer to function as an information processing apparatus according to the present embodiment is provided, but the present embodiment can further provide a recording medium storing the above-described program, in combination, for example.

The above-described configuration indicates an example of the present embodiment, and naturally falls within the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including:
   a processing unit configured to perform, on the basis of attribute information indicating an attribute of a provision target of an advertisement, and information regarding a vehicle that provides an advertisement, control regarding an advertisement to be provided by the vehicle.
(2) The information processing apparatus according to (1), in which the processing unit
   specifies an area in which an advertisement is to be provided, and
   performs the control regarding the advertisement, on the basis of the attribute information of the provision target included in the specified area, and the information regarding the vehicle included in the specified area.
(3) The information processing apparatus according to (1) or (2), in which the processing unit performs, as the control regarding the advertisement, control of content of an advertisement to be provided, and control of provision of an advertisement.
(4) The information processing apparatus according to any one of (1) to (3), in which the processing unit decides an advertisement on the basis of the attribute information and the information regarding the vehicle, and causes the vehicle to provide the decided advertisement.
(5) The information processing apparatus according to (4), in which the processing unit decides one type of advertisement, and causes the vehicle to provide the decided one type of advertisement.
(6) The information processing apparatus according to (4), in which the processing unit decides a plurality of types of advertisements, and causes the vehicle to provide the decided plurality of types of advertisements.
(7) The information processing apparatus according to (6), in which the processing unit
   decides a plurality of types of advertisements with placing priorities thereon, and
   causes the vehicle to provide the decided plurality of types of advertisements using a provision method that is based on the priorities.
(8) The information processing apparatus according to any one of (4) to (7), in which the processing unit decides, as an advertisement to be provided by the vehicle, an advertisement corresponding to a position of the vehicle that is to be specified on the basis of the information regarding the vehicle, and the provision target that is to be specified on the basis of the attribute information.
(9) The information processing apparatus according to any one of (4) to (8), in which the processing unit controls a provision method of the decided advertisement on the basis of either one or both of the attribute information and the information regarding the vehicle.
(10) The information processing apparatus according to (9), in which the processing unit restricts provision of the decided advertisement in the vehicle on the basis of the information regarding the vehicle.
(11) The information processing apparatus according to (10), in which the processing unit does not cause the vehicle to provide the decided advertisement.
(12) The information processing apparatus according to (10), in which, in a case where the vehicle includes a plurality of provision devices that provides an advertisement,
   the processing unit restricts provision of the advertisement that uses a part of the plurality of provision devices included in the vehicle.
(13) The information processing apparatus according to (9) or (10), in which the processing unit causes a plurality of the vehicles to provide the decided advertisement in cooperation on the basis of the information regarding the vehicle corresponding to each of the plurality of vehicles.
(14) The information processing apparatus according to any one of (9) to (13), in which the processing unit restricts a provision time of the decided advertisement in the vehicle on the basis of the attribute information.
(15) The information processing apparatus according to any one of (1) to (14), in which the processing unit further performs processing regarding evaluation of an advertisement provided by the vehicle.
(16) The information processing apparatus according to (15), in which the processing unit causes the vehicle to provide an advertisement corresponding to a result of the processing regarding evaluation of the advertisement.
(17) An information processing system including:
   one or two or more vehicles; and
   an information processing apparatus configured to perform control regarding an advertisement to be provided by each of the vehicles,
   the information processing apparatus includes
   a processing unit configured to perform, on the basis of attribute information indicating an attribute of a provision target of an advertisement, and information regarding a vehicle that provides an advertisement, the control regarding the advertisement.

### Reference Signs List

- 100: information processing apparatus
- 102, 202: communication unit
- 104, 210: control unit
- 110: processing unit
- 200, 200A, 200B, 200C: vehicle
- 204: imaging unit
- 206: display unit
- 208: operation unit
- 300: network

## Claims

1. An information processing apparatus comprising:
a processing unit configured to perform, on a basis of attribute information indicating an attribute of a provision target of an advertisement, and information regarding a vehicle that provides an advertisement, control regarding an advertisement to be provided by the vehicle.

2. The information processing apparatus according to claim 1, wherein the processing unit
specifies an area in which an advertisement is to be provided, and
performs the control regarding the advertisement, on a basis of the attribute information of the provision target included in the specified area, and the information regarding the vehicle included in the specified area.

3. The information processing apparatus according to claim 1, wherein the processing unit performs, as the control regarding the advertisement, control of content of an advertisement to be provided, and control of provision of an advertisement.

4. The information processing apparatus according to claim 1, wherein the processing unit decides an advertisement on a basis of the attribute information and the information regarding the vehicle, and causes the vehicle to provide the decided advertisement.

5. The information processing apparatus according to claim 4, wherein the processing unit decides one type of advertisement, and causes the vehicle to provide the decided one type of advertisement.

6. The information processing apparatus according to claim 4, wherein the processing unit decides a plurality of types of advertisements, and causes the vehicle to provide the decided plurality of types of advertisements.

7. The information processing apparatus according to claim 6, wherein the processing unit
decides a plurality of types of advertisements with placing priorities thereon, and
causes the vehicle to provide the decided plurality of types of advertisements using a provision method that is based on the priorities.

8. The information processing apparatus according to claim 4, wherein the processing unit decides, as an advertisement to be provided by the vehicle, an advertisement corresponding to a position of the vehicle that is to be specified on a basis of the information regarding the vehicle, and the provision target that is to be specified on a basis of the attribute information.

9. The information processing apparatus according to claim 4, wherein the processing unit controls a provision method of the decided advertisement on a basis of either one or both of the attribute information and the information regarding the vehicle.

10. The information processing apparatus according to claim 9, wherein the processing unit restricts provision of the decided advertisement in the vehicle on a basis of the information regarding the vehicle.

11. The information processing apparatus according to claim 10, wherein the processing unit does not cause the vehicle to provide the decided advertisement.

12. The information processing apparatus according to claim 10, wherein, in a case where the vehicle includes a plurality of provision devices that provides an advertisement,
the processing unit restricts provision of the advertisement that uses a part of the plurality of provision devices included in the vehicle.

13. The information processing apparatus according to claim 9, wherein the processing unit causes a plurality of the vehicles to provide the decided advertisement in cooperation on a basis of the information regarding the vehicle corresponding to each of the plurality of vehicles.

14. The information processing apparatus according to claim 9, wherein the processing unit restricts a provision time of the decided advertisement in the vehicle on a basis of the attribute information.

15. The information processing apparatus according to claim 1, wherein the processing unit further performs processing regarding evaluation of an advertisement provided by the vehicle.

16. The information processing apparatus according to claim 15, wherein the processing unit causes the vehicle to provide an advertisement corresponding to a result of the processing regarding evaluation of the advertisement.

17. An information processing system comprising:
one or two or more vehicles; and
an information processing apparatus configured to perform control regarding an advertisement to be provided by each of the vehicles,
the information processing apparatus includes
a processing unit configured to perform, on a basis of attribute information indicating an attribute of a provision target of an advertisement, and information regarding a vehicle that provides an advertisement, the control regarding the advertisement.
